Europäisches Patentamt

European Patent Office

Office européen des brevets

(19)

(11) **EP 1 248 425 A1**

(12) **EUROPEAN PATENT APPLICATION**

(43) Date of publication:
**09.10.2002 Bulletin 2002/41**

(51) Int Cl.$^7$: **H04L 25/03**

(21) Application number: **01810844.9**

(22) Date of filing: **31.08.2001**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **06.04.2001 EP 01810347**

(71) Applicant: **Ascom Systec AG**
**5506 Mägenwil (CH)**

(72) Inventor: **Sailer, Thomas**
**8006 Zürich (CH)**

(74) Representative:
**Roshardt, Werner Alfred, Dipl.-Phys.**
**Keller & Partner**
**Patentanwälte AG**
**Schmiedenplatz 5**
**Postfach**
**3000 Bern 7 (CH)**

(54) **Calculation of DFE coefficients from CIR**

(57)     A method for equalizing a receiver signal in a digital receiver with the aid of a DFE (decision feedback equalizer) (2) including one or several FF (feed-forward) filters (4) and a FB (feed-back) filter (6), comprises a process based on displacement structure theory for solving a set of equations, which optimum filter coefficients for the DFE (2) in terms of the CIR (channel impulse response). First, the FF filter coefficients (14) are computed, and then the FB filter coefficients (16) are computed by convolting the FF filter coefficients (14) with the CIR. The circuit means for performing the method comprise a linear chain of CORDIC type processing elements

(21,22,23,31,32,33,34,41,42,43,50,61,62,63,64,65,70, 81,82,91).

65

Fig. 12

## Description

### Technical Field

The invention relates to a method and a circuit arrangement for equalizing a receive signal in a digital receiver with the aid of a DFE (decision feedback equalizer).

### Prior Art

In communications systems which use transmission media such as radio or electric power-lines, the transmission medium exhibits time-dispersive propagation. This effect is typically caused by multipath propagation. Where time dispersion is present and the signaling rate of the system is high, the receivers in the system need to compensate for it. This can be done by using a DFE.

A DFE comprises FF (feed-forward) and FB (feed-back) filters and a decision device. The coefficients of the FF and FB filters in the DFE must be correctly chosen. Their optimum values depend on the exact nature of the time dispersion in the medium, which will in general change over time. The time dispersion at a given time may be characterized by the CIR (channel impulse response).

The current invention concerns itself with systems where the CIR is known in the receiver. If the CIR is known, the optimum coefficients for the DFE can be calculated from it. *[WO 00/27083]* describes a set of equations for defining the optimum DFE coefficients in terms of a known CIR, where optimization is performed with respect to Minimum Mean Square Error (MMSE). These equations define the optimum for a certain class of modulation schemes. Equations defining the optimum coefficients for other modulation schemes and other assumptions (e.g. about noise power spectral density or number of receiver antennas) may be obtained from standard texts, such as e.g.*[J. G. Proakis: Digital Communications].*

Before the DFE can be used, the appropriate one of these sets of equations has to be solved for the DFE coefficients. All such sets of equations have a very similar structure and can be similarly solved.

Known solutions (i.e. methods and/or circuit arrangements for solving such sets of equations) are rather complex and slow. Such a solution is described e.g. in*[Kailath, T. and A. H. Sayed, 1995: Displacement Structure: Theory and Applications; SIAM Review **37**(3), 297-386].*

### Summary of the Invention

It is an object of the present invention to provide a method and a circuit arrangement for equalizing a receive signal in a digital receiver with the aid of a DFE structure, said method and circuit arrangement enabling to improve performance and/or reduce computational complexity in the receiver.

This object can be achieved with a method and/or a circuit arrangement defined by the independent claims.

According to the invention, a method for equalizing a receive signal in a digital receiver with the aid of a DFE includes a process based on displacement structure theory for solving a set of equations defining optimum filter coefficients for the DFE in terms of a CIR of the receiver. During execution of said process first the FF filter coefficients are computed and then the FB filter coefficients are computed by convolving the FF filter coefficients with the CIR.

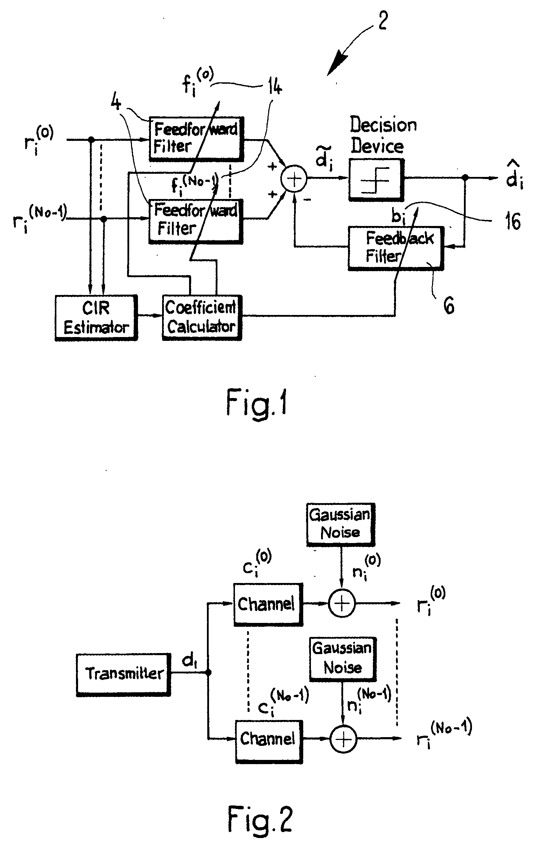

Fig. 1 depicts a schematic diagram of a known DFE. The diagram of Fig. 1 is valid also for the DFE used for the invention. The DFE consists of as many FF filters as there are channel outputs per transmitted symbols. The outputs of the FF filters are summed and the ISI (intersymbol interference) from the past decided symbols are subtracted by the FB filter. The resulting signal is fed to a decision device. Both filters are most often implemented as linear transversal FIR (finite impulse response) filters.

Instead of directly computing the equalizer coefficients from the known training symbols, it is computationally attractive to follow an indirect path by first computing the CIR estimate and then the optimal equalizer coefficients from the CIR estimate. The channel is assumed to be time invariant over the course of a single packet.

Often the channel coherence time can be assumed to be much larger than the packet transmission time, so the DFE coefficients could stay unchanged for multiple packets. But since in a carrier sense multiple access scenario it is not clear a priori which transmitter originated a packet, the receiver must be able to compute new DFE coefficients for every packet.

Several methods are known to derive optimum filter coefficients by first computing FB filter coefficients and then computing FF filter coefficients from the FB filter coefficients by using a procedure known as back substitution. In *[Al-Dhahir and Cioffi, 1995, MMSE Decision-Feedback Equalizers: Finite-Length Results. IEEE Transactions on Information Theory **41**(4), 961-975]* equations for the filter coefficients are derived by writing the equalization problem of a whole block in matrix form, using a finite CIR put into a fully windowed Toeplitz matrix and performing a QR factorization procedure for computing the optimum FB coefficients. The FF filter coefficients are then computed from the FB filter coefficients by back substitution. In *[Kailath, T. and A. H. Sayed, 1995: Displacement Structure: Theory and Applications; SIAM Review 37(3), 297-386]* a process is proposed based on displacement structure theory for solving a set of equations defining optimum filter coefficients for the DFE in terms of a CIR of the receiver. Again the FF filter coefficients are computed from the FB filter coefficients by back substitution.

In Contrast to this prior art methods however, according to the method of the invention the FF filter coefficients are calculated first, and then the FB filter coefficients are computed by convolving the FF filter coefficients with the CIR. As compared to back substitution the method according to the invention is much better suited to parallel VLSI implementation. In fact, it can be performed using the FF filter hardware of the DFE.

According to a first aspect of the invention a circuit arrangement for equalizing a receive signal in a digital receiver comprises a DFE and circuit means for performing a process based on displacement structure theory for solving a set of equations defining optimum filter coefficients for the DFE in terms of a CIR of the receiver. The circuit means are configured and arranged such that they first compute the FF filter coefficients and then compute the FB filter coefficients byconvolving the FF filter coefficients with the CIR. It goes without saying that the circuit arrangement according to this aspect of the invention is suited for performing the aforementioned method of the invention.

According to another aspect of the invention a circuit arrangement for equalizing a receive signal in a digital receiver comprises a DFE and circuit means for performing a process for solving a set of equations defining optimum filter coefficients for the DFE in terms of a CIR of the receiver. The circuit means comprise a linear chain of CORDIC (Coordinate Rotation Digital Computer) type processing elements. The circuit arrangement according to this aspect of the invention is well adapted for performing the aforementioned method of the invention. However it is also suited for performing other methods for equalizing a receive signal in a digital receiver with the aid of a DFE, which include a process based on displacement structure theory for solving a set of equations defining optimum filter coefficients for the DFE in terms of a CIR of the receiver.

Computing the DFE FF filter coefficients from the CIR requires the solution of a structured system of linear equations. It is known to use a linear chain of processing elements of the multiply-accumulate type to solve such block near-to-Toeplitz systems. In contrast to this known circuit arrangement the circuit arrangement according to one aspect of the present invention comprises a linear chain of processing elements using CORDIC blocks (also designated as CORDIC type processing elements). CORDIC type processing elements are advantageous for VLSI implementation over multiply-accumulate type processing elements. With $N_f$ designating the number of FF filter coefficients, the VLSI architecture based on CORDIC type processing elements according to the invention computes the solution in $O(N_f)$ time and requires only $O(N_f)$ processing elements.

Preferably the circuit means comprise a master CORDIC block and a slave CORDIC block, said master CORDIC block receiving at a control input a first status signal and being switched between a vectoring mode of operation and a rotation mode of operation depending on the first status signal. When performing the above mentioned method according to the invention, the first status signal may indicate the state of processing the first row of the matrix G or B. The master CORDIC block may produce a second status signal and transmit it to a control input of the slave CORDIC block, which is being switched between a rotating mode of operation with a first direction of rotation and a rotation mode of operation with a second rotation of direction depending on the second status signal.

The circuit means may further comprise a FIFO memory means arranged in a feedback loop with respect to the linear chain of CORDIC type processing elements. This allows for reducing the number of CORDIC type processing elements used for the circuit arrangement according to the invention.

From the following detailed description and from all the claims as a whole it will be clear to a person skilled in the art, that there exist more advantageous embodiments and combinations of features of the invention.

**Brief description of the drawings**

The drawings used for illustration of the examples show:

Fig.. 1      a schematic diagram of a DFE;

Fig. 2      a schematic diagram of a channel model of a communication system, for which the method and/or the circuit arrangement according to the invention are to be used;

Fig. 3      a schematic diagram of the general architecture of a circuit arrangement for computing the DFE FF filter coefficients according to a first embodiment of the invention;

Fig. 4      a schematic diagram of the general architecture of a circuit arrangement for computing the DFE FF filter coefficients according to a second embodiment of the invention;

Fig. 5    a schematic diagram of the general architecture of a circuit arrangement for computing the DFE FF filter coefficients according to a third embodiment of the invention;

Fig. 6    a schematic diagram of two CORDIC blocks of a PE;

Fig. 7    a schematic diagram of a CORDIC microrotation slice of the CORDIC blocks depicted in Fig. 6;

Fig. 8    a schematic diagram of a PE for $N_D = 1$, $N_O = 2$, real numbers, white noise, of a circuit arrangement for computing DFE filter coefficients according to the invention;

Fig. 9    a schematic diagram of a PE for $N_D = 1$, $N_O = 2$, real numbers, colored noise, of a circuit arrangement for computing DFE filter coefficients according to the invention;

Fig. 10    a schematic diagram of a PE for $N_D = 1$, $N_O = 1$, complex numbers, white noise, of a circuit arrangement for computing DFE filter coefficients according to the invention;

Fig. 11    a schematic diagram of a PE for $N_D = 1$, $N_O = 1$, complex numbers, colored noise, of a circuit arrangement for computing DFE filter coefficients according to the invention;

Fig. 12    a detailed diagram of a PE for $N_D = 1$, $N_O = 2$, complex numbers, white noise, of a circuit arrangement for computing DFE filter coefficients according to the invention;

Fig. 13    a schematic diagram of a simplified PE for $N_D = 1$, $N_O = 2$, real numbers, white noise, two passes per iteration of a circuit arrangement for computing DFE filter coefficients according to the invention;

Fig. 14    a graphical representation of the results of computer simulation of residual ISI vs. number of microrotations;

Fig. 15    a graphical representation of the results of computer simulation of residual ISI vs. wordlength;

Fig. 16    a schematic diagram of a circuit arrangement with minimum latency architecture for DFE filter coefficient computation according to the invention;

Fig. 17    a schematic diagram of a circuit arrangement with single PE architecture for DFE filter coefficient computation according to the invention.

In principle in the drawings the same objects are given the same reference signs.

**Ways of carrying out the invention**

**System Model**

Fig. 2 depicts the channel model of a communication system, whose transmission medium exhibits time-dispersive propagation, which is compensated for by the method and the circuit arrangement according to the invention. For each symbol generated by the transmitter $d_i$, the channel outputs $N_O$ values that are linear combinations of transmitter symbols corrupted by stationary gaussian noise $\mathbf{n}_i$. i denotes the discrete time index. $(\bullet)^*$ denotes elementwise complex conjugation, $(\bullet)^T$ transposition, and $(\bullet)^H$ hermitian transposition. E[] denotes the expectation operator. $\mathbf{C}_i = (C_i^{(0)} \ldots C_i^{(N_0-1)})^T$ denotes the channel impulse response coefficients, $\mathbf{r}_i = (r_i^{(0)} \ldots r_i^{(N0-1)})^T$ the received signal vector at time index i, and $\mathbf{n}_i = (n_i^{(0)} \ldots n_i^{(N0-1)})^T$ the added noise vector.

$$\mathbf{r}_i = \sum_{j=0}^{N_f-1} d_{i-j}\mathbf{c}_j + \mathbf{n}_i \tag{I}$$

The channel output is given by (I). The reason for treating the more complex single input multiple output (SIMO) channel is the possibility to cast several practically interesting configuration into this framework. The T/2 spaced DFE may be treated within this framework ($N_O = 2$).

Normally, all involved signals are complex. Some important signal constellations, such as binary phase shift keying (BPSK) and minimum shift keying (MSK) employ a real signal constellation ($d_i \in \mathbb{R}$R). In this case, one might want to minimize only the real part of the error energy at the decision point, because the decision device is going to throw away the imaginary part anyway *[WO 00/27083]*. This configuration may be treated as an all real system with two channel outputs ($N_O = 2$).

Figure 1 depicts the Decision Feedback Equalizer 2. $d_i$ denotes the decision point signal, $\hat{d}_i$ the recovered estimate of the transmitted signal, $N_f$ the number of FF filter coefficients 14, and $\mathbf{N}_b$ the number of FB filter coefficients 16.

It is well known that the optimal FF filter coefficients 14 according to the MMSE criterion can be computed by solving the linear system of equations $\mathbf{A}\mathbf{x} = \mathbf{y}$ (II.1), where

$$\mathbf{A} = \begin{pmatrix} \mathbf{c}_0^* \mathbf{c}_0^T + \mathbf{N}_{(0-0)} & \mathbf{c}_0^* \mathbf{c}_1^T + \mathbf{N}_{(1-0)} & \mathbf{c}_0^* \mathbf{c}_2^T + \mathbf{N}_{(2-0)} & \cdots \\ \mathbf{c}_1^* \mathbf{c}_0^T + \mathbf{N}_{(0-1)} & \mathbf{c}_1^* \mathbf{c}_1^T + \mathbf{c}_0^* \mathbf{c}_0^T + \mathbf{N}_{(1-1)} & \mathbf{c}_1^* \mathbf{c}_2^T + \mathbf{c}_0^* \mathbf{c}_1^T + \mathbf{N}_{(2-1)} & \cdots \\ \mathbf{c}_2^* \mathbf{c}_0^T + \mathbf{N}_{(0-2)} & \mathbf{c}_2^* \mathbf{c}_1^T + \mathbf{c}_1^* \mathbf{c}_0^T + \mathbf{N}_{(1-2)} & \mathbf{c}_2^* \mathbf{c}_2^T + \mathbf{c}_1^* \mathbf{c}_1^T + \mathbf{c}_0^* \mathbf{c}_0^T + \mathbf{N}_{(2-2)} & \cdots \\ \vdots & \vdots & \vdots & \ddots \end{pmatrix} \quad \text{(II.2)}$$

the noise $\mathbf{N}_{i-j} = E[\mathbf{n}_j^* \mathbf{n}_i^T]$ is assumed to be stationary,

$$\mathbf{x} = \begin{pmatrix} \mathbf{f}_{N_f-1} \\ \mathbf{f}_{N_f-2} \\ \vdots \\ \mathbf{f}_0 \end{pmatrix} \quad \text{(III)}$$

and

$$\mathbf{y} = \begin{pmatrix} \mathbf{c}_0^* \\ \mathbf{c}_1^* \\ \vdots \\ \mathbf{c}_{N_f-1}^* \end{pmatrix} \quad \text{(IV)}$$

$\mathbf{A}$ is a block matrix of size $N_f \times N_f$ where the blocks are of size $N_O \times N_O$. $\mathbf{A}$ possesses hermitian symmetry. The FB coefficients 16

$$b_k = \sum_{j=0}^{N_f-1} \mathbf{c}_{k+\Delta-j}^T \mathbf{f}_j \quad 1 \le k \le N_b \quad \text{(V)}$$

can be computed by convolving the CIR with the FF coefficients 14.

**Method according to conventional displacement structure theory**

For the purpose of a better understanding of the method based on a modified displacement structure theory according to the invention, which is described later, first a known method for solving the set of equations as defined by equations II - IV is described, which known method is based on conventional displacement structure theory.

The matrix **A** is highly structured. Each element is the sum of its north west neighboring element plus an additional term. This structure can be exploited to simplify the inversion by using the Displacement Structure Theory *[Kailath, T. and A. H. Sayed, 1995: Displacement Structure: Theory and Applications; SIAM Review 37(3), 297-386].* In this subsection the basic displacement structure algorithm is reviewed. It factors the matrix **A** into its lower triangular Cholesky factors **L,** i.e. **A** = **LL\*,** in an order recursive fashion. The idea is to use a "compressed" representation of **A** and to perform the Cholesky recursion on that representation.

Using the block lower shift matrix

$$
\mathbf{Z} = \begin{pmatrix} \mathbf{0} & \mathbf{0} & \mathbf{0} & \mathbf{0} & \cdots \\ \mathbf{I} & \mathbf{0} & \mathbf{0} & \mathbf{0} & \cdots \\ \mathbf{0} & \mathbf{I} & \mathbf{0} & \mathbf{0} & \cdots \\ \mathbf{0} & \mathbf{0} & \mathbf{I} & \mathbf{0} & \cdots \\ \vdots & \vdots & \vdots & \vdots & \ddots \end{pmatrix}
\qquad (VI)
$$

where **I** denotes the $N_O \times N_O$ identity matrix and **0** the $N_O \times N_O$ all zero matrix, the displacement representation of **A** with respect to the displacement operators **Z**

$$
\nabla_{\{Z,Z\}}\mathbf{A} = \mathbf{A} - \mathbf{Z}\mathbf{A}\mathbf{Z}^H = \begin{pmatrix} \mathbf{c}_0^*\mathbf{c}_0^T + \mathbf{N}_0 & \mathbf{c}_0^*\mathbf{c}_1^T + \mathbf{N}_1 & \mathbf{c}_0^*\mathbf{c}_2^T + \mathbf{N}_2 & \cdots \\ \mathbf{c}_1^*\mathbf{c}_0^T + \mathbf{N}_{-1} & \mathbf{c}_1^*\mathbf{c}_1^T & \mathbf{c}_1^*\mathbf{c}_2^T & \cdots \\ \mathbf{c}_2^*\mathbf{c}_0^T + \mathbf{N}_{-2} & \mathbf{c}_2^*\mathbf{c}_1^T & \mathbf{c}_2^*\mathbf{c}_2^T & \cdots \\ \vdots & \vdots & \vdots & \ddots \end{pmatrix} = \mathbf{GJG}^H
\qquad (VII)
$$

can be defined.

It can be seen that $\nabla_{\{Z,Z\}}\mathbf{A}$ can be factored into a product of the form **GJG**$^H$ , where **J** = diag $\{\pm 1, \pm 1, ..., \pm 1\}$ is called the signature matrix and **G** is called the generator of $\nabla_{\{Z,Z\}}\mathbf{A}$.

$$
\mathbf{G} = \begin{pmatrix} \mathbf{c}_0^* & \mathbf{N}_0\mathbf{N}_0^{-1/2} & \mathbf{0} \\ \mathbf{c}_1^* & \mathbf{N}_1\mathbf{N}_0^{-1/2} & \mathbf{N}_1\mathbf{N}_0^{-1/2} \\ \mathbf{c}_2^* & \mathbf{N}_2\mathbf{N}_0^{-1/2} & \mathbf{N}_2\mathbf{N}_0^{-1/2} \\ \vdots & \vdots & \vdots \end{pmatrix}
\qquad (VIII)
$$

and

$$
\mathbf{J} = \begin{pmatrix} \mathbf{I} & \mathbf{0} & \mathbf{0} \\ \mathbf{0} & \mathbf{I} & \mathbf{0} \\ \mathbf{0} & \mathbf{0} & -\mathbf{I} \end{pmatrix}
\qquad (IX)
$$

show one factorization of $\nabla_{\{Z,Z\}}\mathbf{A}$. $\mathbf{N}_0^{-\frac{1}{2}}$ denotes the Cholesky factor of the inverse of $\mathbf{N}_0$. In the white noise case, $\mathbf{N}_j$ is identically zero for $j \neq 0$, and $\mathbf{N}_0 = N_0\mathbf{I}$ is a scaled identity matrix. In this case the factorization simplifies to (X) and $\mathbf{J}$ becomes an $N_fN_O$ x $N_fN_O$ identity matrix. We will assume white noise from now on for simplicity.

$$\mathbf{G} = \cdot \begin{pmatrix} \mathbf{c}_0^\star & \sqrt{N_0}\mathbf{I} \\ \mathbf{c}_1^\star & \mathbf{0} \\ \mathbf{c}_2^\star & \mathbf{0} \\ \vdots & \vdots \end{pmatrix} \qquad\qquad\qquad\text{(X)}$$

Generators are not unique. In fact, if $\mathbf{G}$ is a generator, then $\mathbf{G}\ominus$ is also a generator, provided that $\ominus$ is $\mathbf{J}$-unitary, i.e. $\ominus\mathbf{J}\ominus^H = \mathbf{J}$, since $\mathbf{G}\ominus\mathbf{J}\ominus^H\mathbf{G}^H = \mathbf{GJG}^H$.

From now on, matrices and vectors will be treated as matrices and vectors of scalars. First, $\ominus$ shall be chosen such that $\bar{\mathbf{G}} = \mathbf{G}\ominus$ has only one nonzero element in the first row. Any popular zeroing tool such as Givens rotation, fast Givens or Householder reflections may be used to find $\theta$. The column with the nonzero element in its first row is called the pivoting column $\bar{g}_{pvt}$.

Since only $\bar{g}_{pvt}$ has a nonzero first element, $\bar{g}_{pvt}$ determines the first row and the first column of $\nabla_{\{Z,Z\}}\mathbf{A}$ and thus also of $\mathbf{A}$. $\bar{g}_{pvt}$ is therefore the first row of the Cholesky factorization of $\mathbf{A}$. Subtracting $\bar{g}_{pvt}\bar{g}_{pvt}^H$ from $\mathbf{A}$ zeroes the first column and the first row, leaving a problem whose order is reduced by 1. The generators $\mathbf{G}_1$ of this order reduced problem can be computed directly from the generators of the original problem

$$\left(\mathbf{A} - \bar{g}_{pvt}\bar{g}_{pvt}^H\right) - \mathbf{Z}\left(\mathbf{A} - \bar{g}_{pvt}\bar{g}_{pvt}^H\right)\mathbf{Z}^H$$

$$= \left(\bar{g}_0 \cdots \mathbf{Z}\bar{g}_{pvt} \cdots \bar{g}_{r-1}\right)\mathbf{J}\left(\bar{g}_0 \cdots \mathbf{Z}\bar{g}_{pvt} \cdots \bar{g}_{r-1}\right)^H = \begin{pmatrix} \mathbf{0} \\ \mathbf{G}_1 \end{pmatrix}\mathbf{J}\begin{pmatrix} \mathbf{0} \\ \mathbf{G}_1 \end{pmatrix}^H \qquad\text{(XI)}$$

(XI) forms the basis of the displacement structure recursion step.

Algorithm I is summarized below:

1. Find $\ominus$ such that the first row of $\mathbf{G}$ multiplied by $\ominus$ results in a vector with only one nonzero element

2. Postmultiply $\bar{\mathbf{G}} = \mathbf{G}\ominus$. The column with the nonzero first element is called $\bar{g}_{pvt}$.

3. Store $\bar{g}_{pvt}$ into the appropriate column of the Cholesky Factor

4. Premultiply the pivoting column with $\mathbf{Z}$.

5. Delete the first row of the generator.

Since the number of columns of $\mathbf{G}$ and thus the size of $\ominus$ is independent of $N_f$, the algorithm requires $O(N_f^2)$ operations.

**Method according to modified displacement structure theory according to the invention**

The algorithm of the conventional displacement structure theory computes the Cholesky factor. The desired FF filter coefficients need to be obtained by back substitution. In the following section a novel algorithm is developed, that directly outputs the desired FF filter coefficients 14.

Displacement Structure Theory can be generalized to non hermitian symmetric matrices $\mathbf{R}$,

$$\nabla_{\{F1,F2\}}\mathbf{R} = \mathbf{R} - \mathbf{F}_1\mathbf{R}\mathbf{F}_2^H = \mathbf{GJB}^H \qquad\qquad\text{(XII)}$$

There are now two displacement operators ($F_1$ and $F_2$). Also, $G \neq B$ in general. While $G$ and $B$ must have the same number of columns, their number of rows differ fornonsquare matrices.

For hermitian symmetric matrices, the recursion step of the conventional displacement structure algorithm (XI) required the computation of a matrix $\ominus$ that cleared all but one entry of the first row of $G\ominus$. For the general case, two matrices $\ominus$ and $\Gamma$ have to be found that clear all but one entry of the first row of both $G\ominus$ and $B\Gamma$, and for which $\theta J \Gamma^H = J$. This problem is much more involved than the corresponding problem for the hermitian symmetric case.

In the single output case (i.e., $N_D = 1$, where $N_D$ denotes the number of symbols generated by the transmitter per time step, also designated as "Decision Feedback Detector outputs") the block matrix

$$R = \begin{pmatrix} A & y \\ -I & 0 \end{pmatrix} \tag{XIII}$$

of size $2N_fN_o \times (N_fN_o+1)$ consists of the $N_fN_o \times N_fN_o$ matrix $A$ used in the previous section, the $N_fN_o \times 1$ right hand side of that section, an $N_fN_O \times N_fN_O$ negative identity matrix $-I$, and an $N_fN_O \times 1$ zero vector. Now the 1, 1-Schur complement

$$S = 0 + IA^{-1}y \tag{XIV}$$

is exactly the desired solution *[Schur, I.: 1917, "Über Potenzreihen, die im Inneren des Einheitskreises beschränkt sind". Journal für Reine und Angewandte Mathematik **147**, 205-232].* The generators for the displacement structure representation of the 1, 1-Schur complement $\nabla_{\{F1,F2\}}S$ can be found by running the recursion $N_fN_O$ times. But since $S$ is an $N_fN_O \times 1$ vector, $F_1 S F_2 \equiv 0$, and therefore the generators directly represent the desired solution $S$.

Now $F_1$ and $F_2$ need to be found that lead to low rank generators. Suitable displacement operators

$$F_1 = \begin{pmatrix} Z & 0 \\ 0 & Z \end{pmatrix} \tag{XV.1}$$

and

$$F_2 = \begin{pmatrix} Z & 0 \\ 0 & 0 \end{pmatrix} \tag{XV.2}$$

lead to low rank generators

$$\nabla_{\{F_1,F_2\}}\mathbf{R} = \begin{pmatrix} \mathbf{C}_0^* & \sqrt{N_0}\mathbf{I} \\ \mathbf{C}_1^* & \mathbf{0} \\ \mathbf{C}_2^* & \mathbf{0} \\ \vdots & \vdots \\ \mathbf{C}_{N_f-1}^* & \mathbf{0} \\ \mathbf{0} & -\dfrac{1}{\sqrt{N_0}}\mathbf{I} \\ \mathbf{0} & \mathbf{0} \\ \vdots & \vdots \end{pmatrix} \begin{pmatrix} \mathbf{C}_0^* & \sqrt{N_0}\mathbf{I} \\ \mathbf{C}_1^* & \mathbf{0} \\ \mathbf{C}_2^* & \mathbf{0} \\ \vdots & \vdots \\ \mathbf{C}_{N_f-1}^* & \mathbf{0} \\ 1 & \mathbf{0} \end{pmatrix}^H = \mathbf{GB}^H \qquad\qquad (XVI)$$

Again there is some flexibility in choosing the generators. A remarkable fact about the generators in (XVI) is however that the first $N_f N_O$ lines of **G** and **B** are equal. There are two implications of this:

- The general problem of finding $\ominus$ and $\Gamma$ that zeros all but one element in the first row of **G** and **B** and that satisfies $\ominus \mathbf{J}\Gamma = \mathbf{J}$ reduces to the much simpler problem of finding a **J** unitary matrix that zeros all but one element in the first row of **G**

- The number of rows that need to be stored and multiplied by $\ominus$ is reduced

Algorithm II is summarized below:

1. Find $\ominus$ such that the first row of **G** (which equals the first row of **B**) multiplied by $\ominus$ results in a vector with only one nonzero element

2. Postmultiply $\overline{\mathbf{G}} = \mathbf{G}\ominus$ and $\overline{\mathbf{B}} = \mathbf{B}\ominus$. The column with the nonzero first element of $\overline{\mathbf{G}}$ is called $\overline{g}_{pvt}$, the column with the nonzero first element of $\overline{\mathbf{B}}$ is called $\overline{b}_{pvt}$.

3. Store $\overline{g}_{pvt}$ into the appropriate column of the Cholesky Factor (if the Cholesky Factor is explicitly needed)

4. Premultiply $\overline{g}_{pvt}$ with $\mathbf{F}_1$ as defined by equation (XV.1) and premultiply $\overline{b}_{pvt}$ with $\mathbf{F}_2$ as defined by equation (XV.2)

5. Delete the first row of the generator matrices $\overline{\mathbf{G}}$ and $\overline{\mathbf{B}}$. $\overline{\mathbf{G}}$ and $\overline{\mathbf{B}}$ become G and B of the next iteration.

6. Repeat steps 1 - 5 $N_f N_O$ times

7. Multiply the remaining $N_D$ rows of B with the remainder of G to obtain the displacement representation of the FF filter coefficients 14, or, in the single output ($N_D = 1$) case, the FF filter coefficients 14 itself.

It is to be noted, that in step 2 the first $N_f N_O - i$ rows of G and B are equal, where i is the iteration number $0 \leq i \leq N_f N_O - 1$. Therefore, significant number of computations can be saved by performing the multiplications of these rows by $\ominus$ only once.

## VLSI architecture of circuit arrangement

### General architecture

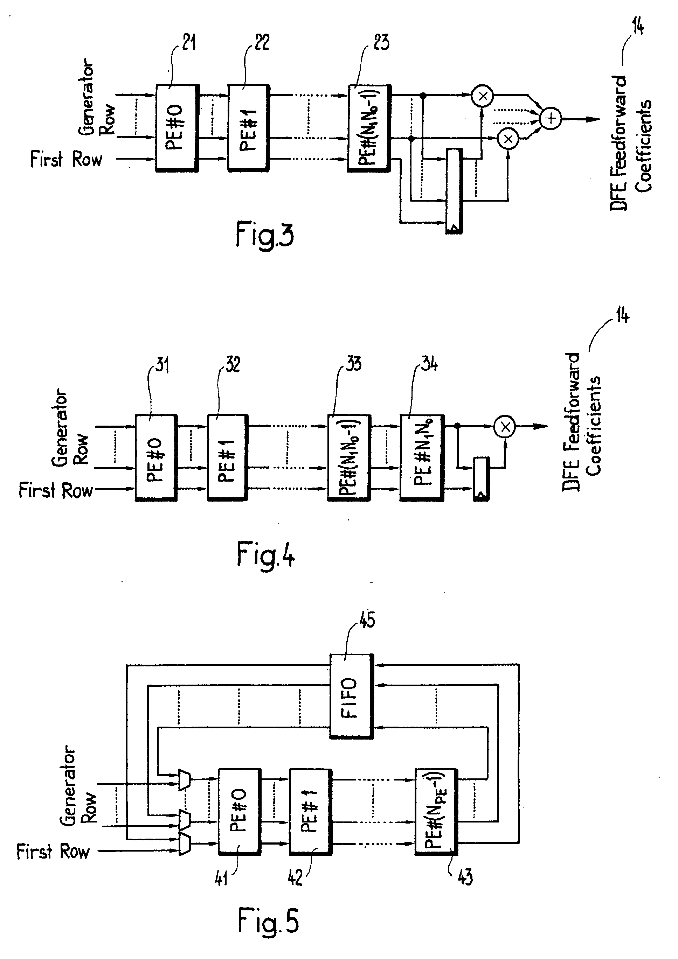

The algorithm II based on a modified displacement structure theory as described above naturally maps onto a linear chain of $N_f N_o$ processing elements 21, 22, 23 (Figure 3). The $2N_f N_o + 1$ rows of **G** and **B** enter the first processing element 21 row wise. At the output of the last processing element 23, the last remaining row of **B** is latched and multiplied by the remaining rows of **G**.

Each PE (processing element) 21, 22, 23 performs one order-reduction step, namely the determination of $\ominus$

on entering of the first row, postmultiplication of all entering rows with $\ominus$, and premultiplication of the pivoting columns with $\mathbf{F}_1$ and $\mathbf{F}_2$, which amounts in delaying the pivoting column by $\mathbf{N}_O$ rows and zeroing certain elements of the pivoting column.

$$
\begin{pmatrix}
\mathbf{G}_1 = \mathbf{B}_1 \\
\mathbf{B}_2 \\
\vdots \\
\mathbf{G}_2
\end{pmatrix}
\qquad (XVII)
$$

It is beneficial to feed the rows of both generator matrices **G** and **B** in the order given by (XVII) from top to bottom. $\mathbf{G}_1$ and $\mathbf{B}_1$ are the rows of **G** and **B** that are equal, $\mathbf{B}_2$ is the remaining row of **B** and $\mathbf{G}_2$ consists of the remaining $N_f N_O$ rows of **G**. That way, the single remaining row of **B,** which must be multiplied/accumulated with all remaining rows of **G**, leaves the last PE 23 first.

A slight modification of the architecture in Figure 3 is depicted in Figure 4. Here, another slightly modified processing element 34 (PE#$N_f N_O$) is appended at the end of the chain of PE's 31, 32, 33, 34. This last PE 34 only performs the $\ominus$ related operations. It does not apply the displacement operator F nor does it delete the first row.

This last PE 34 zeros all but one element of the remaining row of **B**, leaving only one nonzero element whose imaginary part is also zeroed. Thus, the r complex multiplications, where r denotes the number of columns of **G** and **B** required in Figure 3 are now reduced to a single multiplication by a real value per FF filter coefficient 14. This multiplication does not even need to be performed; it only scales the FF filter coefficients 14 and thus also the FB filter coefficients 16 and the bias $\alpha$, by a constant. For the binary antipodal constellation, whose decision device is scaling invariant, only the sign of $\alpha$ has to be retained and combined with the output of the decision device by an exclusive OR gate. In order to avoid increasing the dynamic range of the DFE filter sections, it is however desirable to normalize the FF filter coefficients 14 to fall within a predefined range, e.g. by using a barrel shifter.

As mentioned before, a new computation can be started while the current one is still in flight. This capability is often not necessary. But since all PE's 41, 42, 43 perform the same computation, the number of PE's 41, 42, 43 may be reduced and the data may be cycled multiple times through a (shorter) chain of PE's 41, 42, 43. Figure 5 illustrates this idea.

The FIFO 45 is only necessary if $N_{PE} L_{PE} < 2 N_f N_O + 1$, where $N_{PE}$ denotes the number of PE's 41, 42, 43 and $L_{PE}$ the latency of each PE 41, 42, 43. On the other hand, if $N_{PE} L_{PE} \geq 2 N_f N_O + 1$, then the utilization of the PE's may be increased at the expense of an increased latency.

**The PE's**

The main purpose of each PE is to find a suitable **J** unitary matrix $\Theta$ that zeroes all but one element in the first generator row and then multiply the whole generator with $\Theta$**.**

The case where $\mathbf{G} \in \mathbb{R}^{N_f N_O \times r}$ will be discussed first, with the necessary extensions for $\mathbf{G} \in \mathbb{C}^{N_f N_O \times r}$ presented afterwards.

Instead of solving the whole problem at the same time, a divide and conquer approach shall be chosen. The matrix $\ominus$ is split into a number of simpler matrices, i.e. $\ominus = {}_1\ominus_2 ... \ominus_j$. Each of these simpler submatrices only deals with two columns of the generator, while leaving all other columns unaffected.

The purpose now of these smaller matrices $\ominus_i$ is to zero the first element of one of the two columns it processes. The condition is that $\ominus_i$ must be $\mathbf{J}_i$ unitary, i.e. $\ominus_i \mathbf{J}_i \ominus_i^H = \mathbf{J}_i$, where $\mathbf{J}_i$ is the diagonal signature matrix consisting of the two entries from the signature matrix **J** corresponding to the two columns selected.

Two cases need to be distinguished, namely the case when the diagonal entries of $\mathbf{J}_i$ have the same sign and the case where these elements have different sign. In the former. case, $\ominus_i$ becomes an angular rotation matrix, and in the latter case, $\ominus_i$ is a hyperbolic rotation matrix.

The standard tool for computing angular and hyperbolic rotations efficiently in VLSI is the CORDIC technique *[Volder, J. E., 1959: The CORDIC Trigonometric Computing Technique; IRE Transactions on Electronic Computers **EC-8**, 330-334. Walther, J. S, 1971: An Unified Algorithm for Elementary Functions; Proceedings Spring Joint Computer Conference, Vol. 38. p. 397.].* Upon entering of the first row, a rotation angle has to be determined that zeros one of the two elements. This can be achieved with a CORDIC circuit (also designated as CORDIC cell, CORDIC block or CORDIC processor) in vectoring mode. Subsequent rows have to be rotated by the determined angle. This can be achieved with a CORDIC circuit in rotation mode. This is an elegant result because the same hardware can be used for both tasks, namely finding $\ominus$ and multiplying the generator rows with $\ominus$. The CORDIC cell just needs to be switched into vectoring mode for the first generator row and then switched back into rotation mode. Note that the angle does not need to be computed explicitly. It is sufficient to store the direction of each CORDIC microrotation.

PE's for complex numbers are similar to those for real numbers. There are two modifications:

1. r angular CORDIC processors are used to make all r elements of the first row real (i.e. make their imaginary part vanishing);

2. for each CORDIC processor for the $\ominus_i$ matrices, there is a second CORDIC processor working always in rotation mode and processing the imaginary parts slaved to the CORDIC processor for the real part.

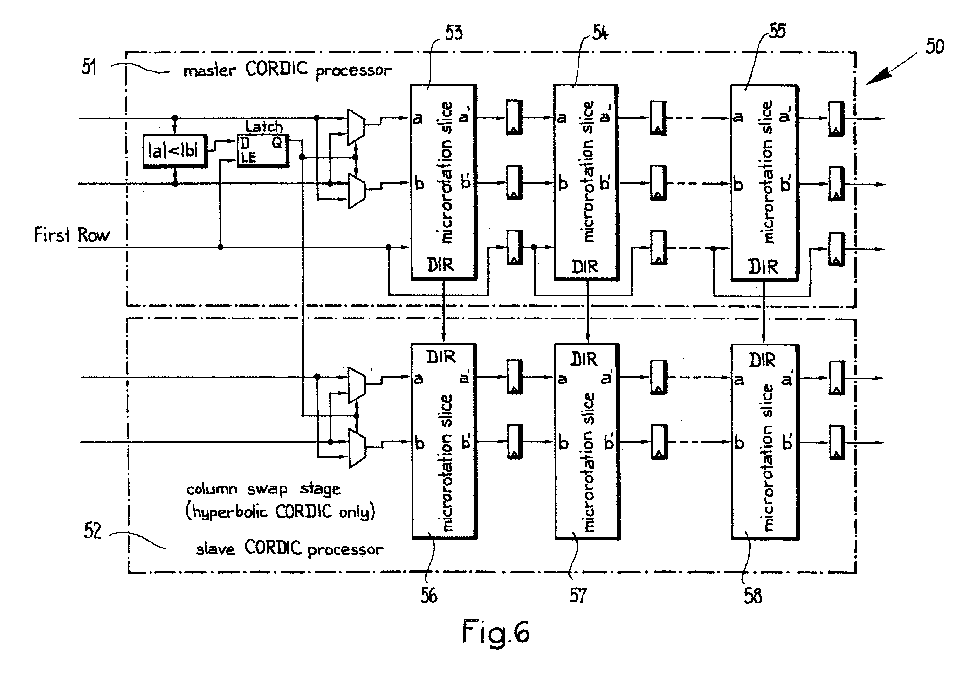

Fig. 6 depicts a schematic diagram of two CORDIC blocks of a PE 50, i.e. a master CORDIC block 51 (also designated as upper CORDIC block 51) and a slave CORDIC block 52 (also designated as lower CORDIC block 52). Each CORDIC block consists of multiple microrotation slices 53, 54, 55 and 56, 57, 58 (also designated as microrotations). The microrotations 53, 54, 55, 56, 57, 58 may be implemented in a pipelined way, as shown, or executed serially on the same microrotation hardware. The signal "FIRST ROW" is active when the first generator row is fed into the CORDIC block. It switches the upper or master CORDIC block 51 into vectoring mode. If inactive, the master CORDIC block 51 operates in rotation mode. In vectoring mode, the master CORDIC block 51 zeros its lower output.

Hyperbolic CORDIC blocks need to swap their inputs if the magnitude of the upper input of the first row is smaller than the magnitude of the lower input to ensure convergence.

The complex Equalizers employ "stacked" CORDIC blocks, depicted with an arrow from the upper to the lower one. The lower or slave CORDIC block 52 always operates in rotating mode with the rotation directions supplied by the master CORDIC block 51.

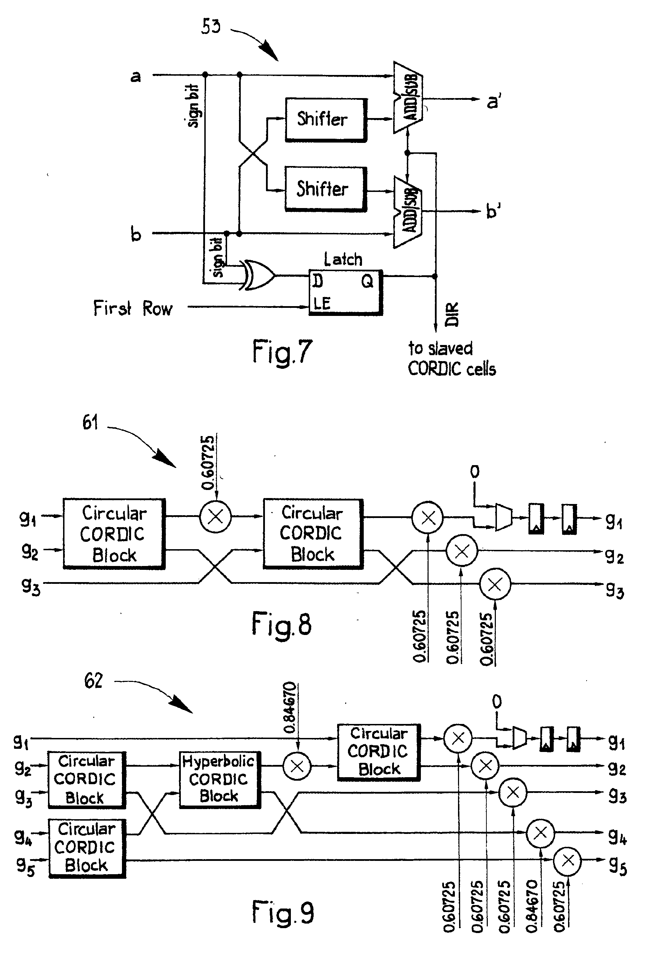

Fig. 7 depicts a schematic diagram of the proposed microrotation 53 (also designated as CORDIC microrotation circuit 53). The circuit 53 computes one microrotation per clock. The microrotations of a CORDIC block can either be computed sequentially on a single microrotation circuit, or they can be computed using a chain of as many microrotation circuits as there are microrotations, possibly with pipeline registers in between. In the former case, the shifter can be realized with a barrel shifter and the microrotation direction storage with an array of latches or a small RAM block. In the latter case, the shifters can be realized with wiring, because the shift count is constant. The following truth table (table 1) indicates whether the Adder/Subtractors add or subtract the shifter output to or from the input, depending on the rotation direction signal DIR:

Table 1:

| truth table for microrotation circuit of Fig. 7 | | | | |
|---|---|---|---|---|
| | angular | CORDIC | hyperbolic | CORDIC |
| DIR | 0 | 1 | 0 | 1 |
| Upper ADD/SUB | + | - | - | + |
| Upper ADD/SUB | - | + | - | + |

The domain of convergence is limited, though. Angular CORDIC converges if the angle of the input vector in the cartesian plane lies within $\approx \pm 1.74$ radians. There are, however, two possible choices of $\ominus_i$, one that results in the first element of the pivoting column to be positive and another one that results in a negative element. Instead of using a prerotation stage which rotates the input into the domain of convergence, it is possible to choose the $\ominus_i$ that lies in the domain of convergence. That is the purpose of the XOR gate in Fig. 7.

For hyperbolic rotations, there are additional problems. If the magnitude of both input operands are approximately the same $|a| \approx |b|$, then $\ominus_i \to \pm \infty$. The generator columns whose signature matrix entry has the same sign can be grouped together. Angular CORDIC rotations may be used within both groups to zero all but one element of the first row in each group. Only one hyperbolic CORDIC rotator is then required to zero the single nonzero element in the first row of the column group having a-1 signature matrix entry. If both first row inputs to this single CORDIC rotator have approximately the same magnitude, then the corresponding diagonal element of the Cholesky factorL is close to zero, resulting in at least one very large FF filter coefficient. For well behaved problems, this does not happen.

Furthermore, in hyperbolic mode, the magnitude of the input operands determine which one gets zeroed, namely the operand with the smaller magnitude. This can be circumvented by a stage in front of the hyperbolic CORDIC circuitry that swaps the columns if the magnitude of the first element of the column to be zeroed is bigger than the magnitude of the first element of the pivoting column.

Figures 8 through 11 illustrate the PE structure for $N_D = 1$ equalizers for white and colored noise using real and complex numbers. The constant multipliers cancel the gain introduced by the CORDIC blocks. The constants given are approximate; they depend on the number of microrotations performed by the CORDIC blocks. For the hyperbolic processors, the first stage (shift = 1) is assumed to be executed twice to improve precision when the magnitude of both input signals is approximately the same. The multiplexer(s) and register(s) implement the multiplication of the pivoting column with the displacement operator. $g_i$ denotes the i-th column of the generator, $g_1$ is the pivoting column. $g_i^{Re}$ and $g_i^{Im}$ denote the real and imaginary part of the i-th column, respectively.

Fig. 8 depicts a schematic diagram of a PE 61 for $N_D = 1$, $N_O = 2$, real numbers and white noise. The constant coefficient multipliers cancel the gain of the CORDIC blocks. The registers and the multiplexer perform the premultiplication of the pivoting column with the displacement operators. $g_1$, $g_2$ and $g_3$ denote the generator columns.

Fig. 9 depicts a schematic diagram of a PE 62 for $N_D = 1$, $N_O = 2$, real numbers and colored noise. The constant coefficient multipliers cancel the gain of the CORDIC blocks. The registers and the multiplexer perform the premultiplication of the pivoting column with the displacement operators. $g_1 ... g_5$ denote the generator columns.

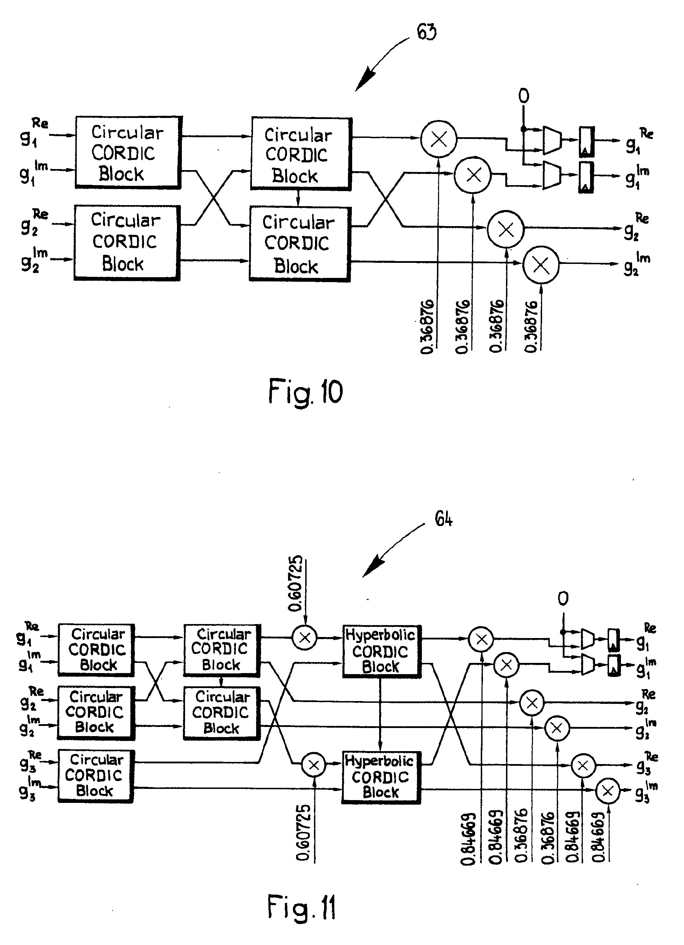

Fig. 10 depicts a schematic diagram of a PE 63 for $N_D = 1$, $N_O = 1$, complex numbers and white noise. The constant coefficient multipliers cancel the gain of the CORDIC blocks. The registers and the multiplexer perform the premultiplication of the pivoting column with the displacement operators. $g_1^{Re}$, $g_1^{Im}$, $g_2^{Re}$ and $g_2^{Im}$ denote the real and imaginary parts of the generator columns.

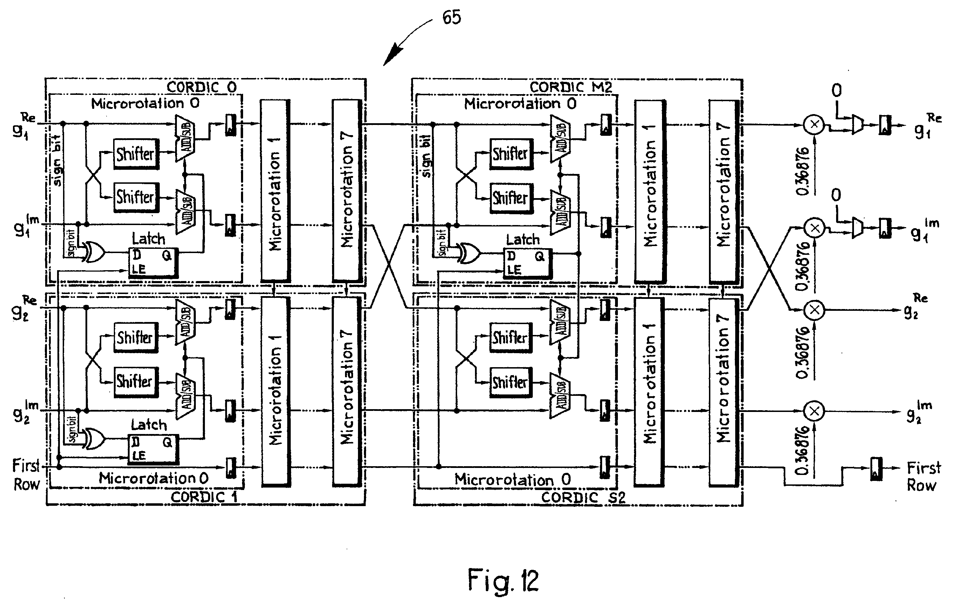

Fig. 11 depicts a schematic diagram of a PE 64 for $N_D = 1$, $N_O = 1$, complex numbers and colored noise. The constant coefficient multipliers cancel the gain of the CORDIC blocks. The registers and the multiplexer perform the premultiplication of the pivoting column with the displacement operators. $g_1^{Re}$, $g_1^{Im} ... g_3^{Re}$ and $g_3^{Im}$ denote the real and imaginary parts of the generator columns.

Fig. 12 shows a detailed diagram of a PE 65 for the $N_D = 1$ Equalizer for complex numbers and white noise using pipelined CORDIC blocks.

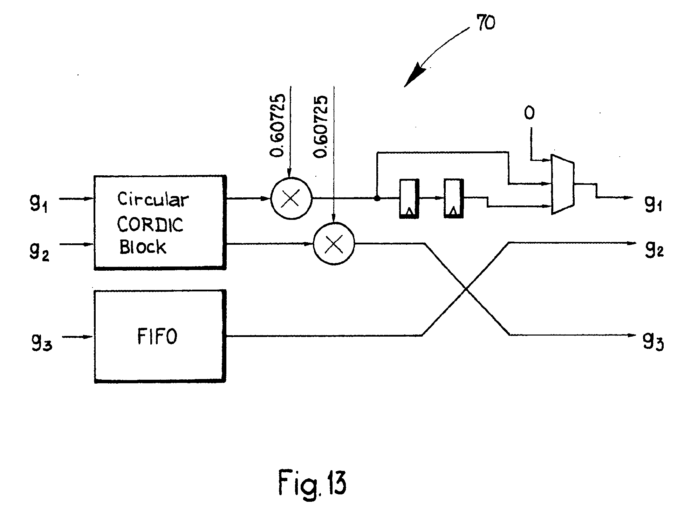

The hardware complexity can be reduced further at the expense of the number of clock cycles required for the computation. Instead of using a PE that operates on all columns simultaneously, it is possible to use a PE 70 that operates only on a lower number of columns per pass, thus requiring multiple passes per iteration. Fig. 13 illustrates this idea. Multiplying the pivoting column with the displacement operator must be performed only during the last pass; the two registers may therefore be bypassed.

**Examples for Hiperlan**

Hereinafter two examples of circuit arrangements are presented, which are well suited for the HIPERLAN I system *[Radio Equipment and Systems (RES), 1995: High PERformance Radio Local Area Network (HIPERLAN), Type 1 functional specification; Technical Report ETS 300 652, European Telecommunications Standards Institute (ETSI)]*.

The HIPERLAN I specification requires a terminal to start transmitting the response to a packet received within 512 bit periods, i.e. 25.6 $\mu$s. The FF filter 4 can for example be implemented by four multipliers operating at 60 MHz, three times the HIPERLAN I bit rate. The FB filter 6 consists of only $N_b = N_f - 1 = 11$ Adder/Subtractors, since $d_i \in \{\pm 1\}$. It is the computation of the DFE coefficients that is generally believed to be a problem.

A symbol spaced DFE 2 with twelve FF taps is assumed, i.e. $N_O = 1$ and $N_f = 12$. This equalizer 2 performs well for typical indoor channels (50ns delay spread), and experiences only minor degradation for bad channels (150ns delay spread). Furthermore, fully pipelined CORDIC elements are assumed, each CORDIC block executes eight microrotations and a data path width of twelve bits is assumed.

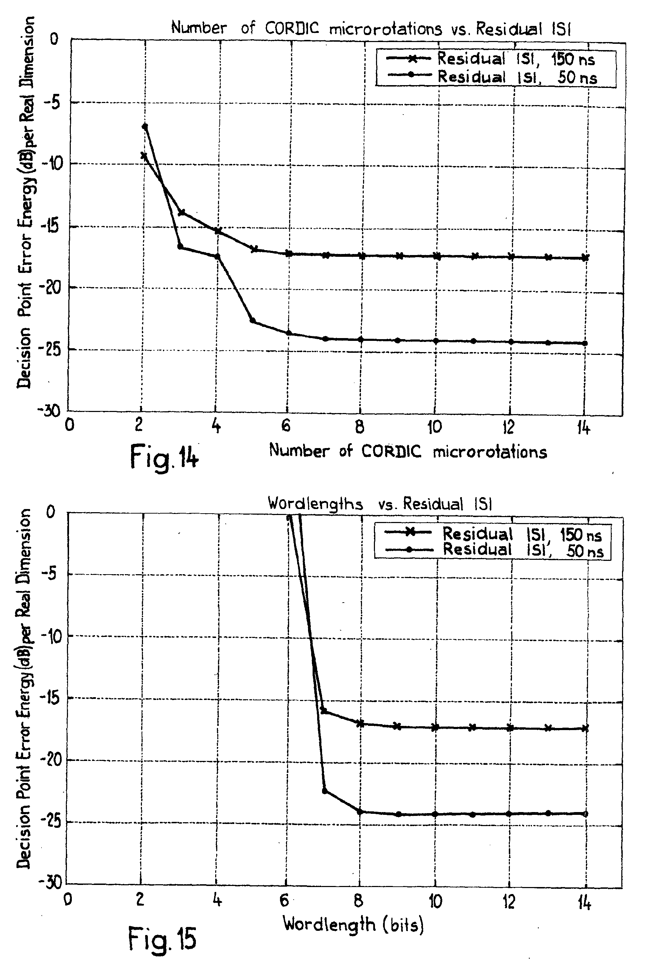

The computer simulations of Fig. 14 show that no further reduction in residual ISI energy at the decision point can be achieved by increasing the number of microrotations. Fig. 15 contains a computer simulation plot of the residual ISI energy versus wordlength, assuming a perfect receiver automatic gain control (AGC). The infinite wordlength performance is reached at a datapath width of 8 Bits, and choosing 12 Bits results in approximately 20dB margin for imperfect AGC.

Since the PE's 81, 82, 91 have four CORDIC blocks and the deletion of a row in series, the total PE latency is 17 clocks. The generator rows pass through $N_f N_O + 1 = 13$ PE's. Table 2 summarizes the PE's 81, 82, 91.

Table 2:

| Summary of processing elements | |
|---|---|
| # of CORDIC blocks | 4 |
| # of microrotations | 8 |
| Total PE latency | 17 clocks |
| # of adder/subtractors | 64 |
| # of wordlength sized registers | 66 |

In determining the implementation complexity the overall control circuitry, the microrotation direction register and XOR gate, the zeroing gates, and the constant coefficient multipliers have been neglected, because their size is small compared to the CORDIC datapath. The constant coefficient multipliers from several or all PE's can be combined and can be implemented with few shift/adds. Shifts can be inserted to prevent excessive growth of the signal magnitude.

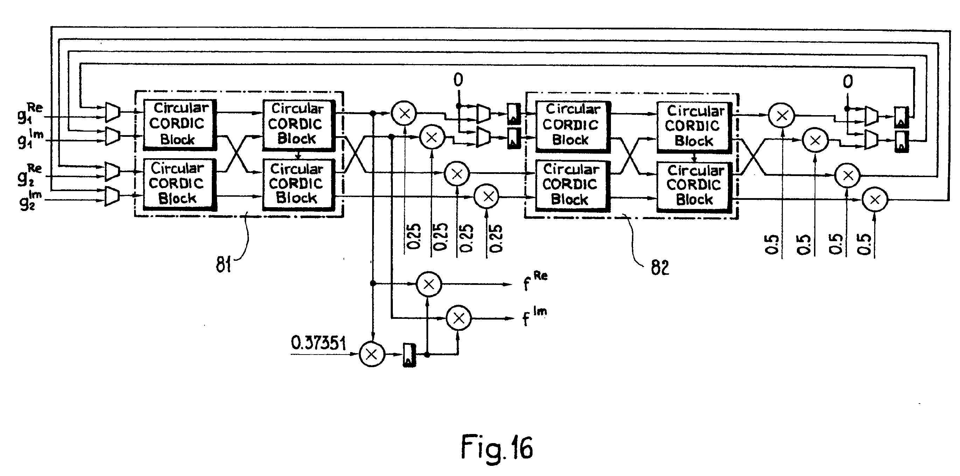

Fig. 16 shows the minimum latency solution. It uses a chain of two PE's 81, 82 and 6½ passes through the chain. No FIFO is necessary.

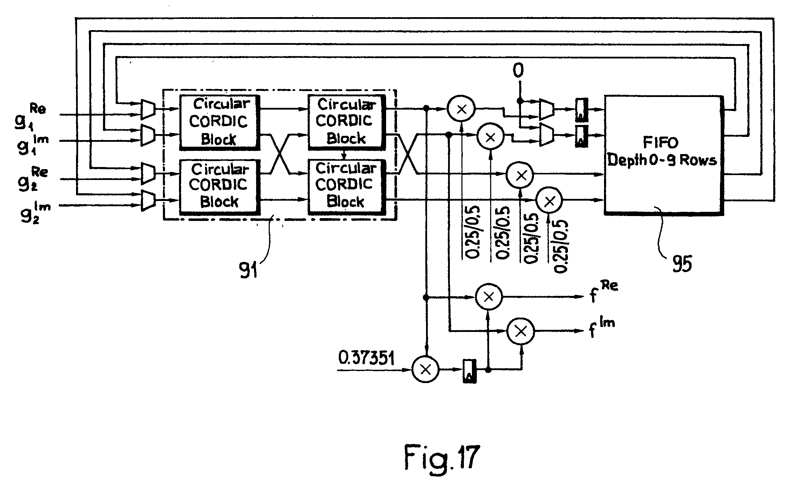

The implementation complexity can be halved by using only one PE 91. This solution is depicted in Fig. 17. Now a FIFO 95 is necessary. It is assumed that the FIFO 95 latency can be varied from 1 to 9.

The implementation numbers (area and power/energy consumption) include the CORDIC datapath only. The controller, the FIFO, and the multipliers are neglected. The constant coefficient multipliers that cancel the gain of the CORDIC blocks have been rearranged so that only one nontrivial constant coefficient multiplier remains in the output circuitry. The two variable x variable multipliers in the output circuitry do not need to be exact with respect to the common argument. It is sufficient to use an exponent detector and two shifters instead.

Table 3 lists area and power consumption data of some cells from the AMS 0.35µm standard cell library *[AMS Austria Mikro Systeme International AG, 0.35 Micron Standard Cell 3.3V Databook - 0.35µm CMOS Digital Core Cells 3.3V, April 2000. http://asic.amsint.com/databooks/csx33/core/.].* 1 x drive strength gates are used because the datapath cell have a fan out of only one or two and the distances are small, leading to small capacitive loading. The power consumption numbers include a cell load capacity of 30fF. A ripple carry adder/subtractor may be built from a 2-input XOR gate and a full adder cell per bit. The shifter uses a 8:1 multiplexer per bit.

Table 3:

| AMS 0.35µm standard cell library data | | | |
|---|---|---|---|
| Gate | Description | Area µm$^2$ | Power µW/MHz |
| EO1 | 2-input XOR (1x) | 146 | 0.883 |
| FA1 | Full-Adder (1x) | 364 | 1.632 |
| MU8 | 8:1 Multiplexer (1x) | 619 | 1.318 |
| DFS8 | Scan D.Type Flip-Flop (1x) | 382 | 1.933 |

Table 4 lists the area and power consumption of wordlength sized components needed in the DFE computation datapath.

Table 4:

| Area an power consumption of datapath components using the AMS 0.35µm standard cell process | | | |
|---|---|---|---|
| Component | Area µm$^2$ | Power µW/MHz | Prop. Delay ns |
| Adder/Subtractor | 6120 | 30.180 | 6.5 |
| Shifter | 7428 | 15.816 | 1 |
| Register | 4584 | 23.196 | 1.2 |

Table 5 lists the summary of two above mentioned HIPERLAN architectures as depicted in Figures 16 and 17. The silicon area and power/energy consumption numbers are approximate and derived from the above mentioned from the AMS 0.35µm standard cell library. An activity factor of 100% and a load of 30fF is assumed.

Table 5:

| summary of two HIPERLAN architectures as depicted in Figures 16 and 17 | | | |
|---|---|---|---|
| | Minimum Latency | Single PE | Unit |
| Figure | 16 | 17 | |
| PE | 2 | 1 | |
| CORDIC blocks | 8 | 4 | |
| Latency | 221 | 270 | clocks |
| Adder/Subtractors | 128 | 64 | wordlength sized |
| Registers | 132 | 66 | wordlength sized |
| Maximum FIFO depth | - | 9 | |

Table 5:   (continued)

| summary of two HIPERLAN architectures as depicted in Figures 16 and 17 | | | |
|---|---|---|---|
| | Minimum Latency | Single PE | Unit |
| Silicon cell area | 1.39 | 0.69 | mm$^2$ |
| Power consumption | 6.9 | 3.5 | mW/MHz |
| Energy consumption | 1.5 | 0.9 | µJ/computation |

The results from table 5 indicate that the circuit arrangement according to the invention is well suited for HIPERLAN. The two proposed architectures are more than twice as fast and require more than ten times less silicon area and energy than similar known architectures for the same purpose. The invention is therefore well suited to cost and power constrained terminals.

To summarize it can be stated that the invention provides a method and a circuit for equalizing a receive signal in a digital receiver with the aid of a DFE structure, said method and circuit enabling to improve performance and/or reduce computational complexity in the receiver.

**Claims**

1.   Method for equalizing a receive signal in a digital receiver with the aid of a DFE (decision feedback equalizer) (2) including one or several FF (feed-forward) filters (4) and one or several FB (feed-back) filters (6), the method including a process based on displacement structure theory for solving a set of equations defining optimum filter coefficients for the DFE (2) in terms of a CIR (channel impulse repose) of the receiver, **characterized in that** for performing said process first the FF filter coefficients (14) are computed and then the FB filter coefficients (16) are computed by convolving the FF filter coefficients (14) with the CIR.

2.   Method according to claim 1, **characterized in that** the set of equations is defined as follows:

$$\mathbf{Ax} = \mathbf{y} \tag{II.1}$$

$$\mathbf{A} = \begin{pmatrix} \mathbf{c}_0^*\mathbf{c}_0^T + \mathbf{N}_{(0-0)} & \mathbf{c}_0^*\mathbf{c}_1^T + \mathbf{N}_{(1-0)} & \mathbf{c}_0^*\mathbf{c}_2^T + \mathbf{N}_{(2-0)} & \cdots \\ \mathbf{c}_1^*\mathbf{c}_0^T + \mathbf{N}_{(0-1)} & \mathbf{c}_1^*\mathbf{c}_1^T + \mathbf{c}_0^*\mathbf{c}_0^T + \mathbf{N}_{(1-1)} & \mathbf{c}_1^*\mathbf{c}_2^T + \mathbf{c}_0^*\mathbf{c}_1^T + \mathbf{N}_{(2-1)} & \cdots \\ \mathbf{c}_2^*\mathbf{c}_0^T + \mathbf{N}_{(0-2)} & \mathbf{c}_2^*\mathbf{c}_1^T + \mathbf{c}_1^*\mathbf{c}_0^T + \mathbf{N}_{(1-2)} & \mathbf{c}_2^*\mathbf{c}_2^T + \mathbf{c}_1^*\mathbf{c}_1^T + \mathbf{c}_0^*\mathbf{c}_0^T + \mathbf{N}_{(2-2)} & \cdots \\ \vdots & \vdots & \vdots & \ddots \end{pmatrix} \tag{II.2}$$

$$\mathbf{X} = \begin{pmatrix} \mathbf{f}_{N_f-1} \\ \mathbf{f}_{N_f-2} \\ \vdots \\ \mathbf{f}_0 \end{pmatrix} \tag{III}$$

$$y = \begin{pmatrix} \mathbf{c}_0^* \\ \mathbf{c}_1^* \\ \vdots \\ \mathbf{c}_{N_f-1}^* \end{pmatrix} \tag{IV}$$

where $\mathbf{f}_j$ denotes the FF filter coefficients (14) for $0 \le j \le N_f-1$, $N_f$ denotes the number of FF filter coefficients (14), $\mathbf{c}_i = (c_i^{(0)} \dots c_i^{(N_0-1)})^T$ denotes the channel impulse response coefficients, i denotes a discrete time index, $N_O$ denotes number of channel outputs, $\mathbf{n}_i = (n_i^{(0)} \dots n_i^{(N_0-1)})^T$ denotes the added noise vector, $\mathbf{E}[\!]$ denotes the expectation operator, $\mathbf{N}_{i-j} = \mathbf{E}[\mathbf{n}_j^* \mathbf{n}_i^T]$ denotes the noise, which is assumed to be stationary and $\mathbf{A}$ is a block matrix of size $N_f$ x $N_f$, where the blocks are of size $N_O$ x $N_O$.

3. Method according to claim 2, **characterized in that** the process for solving the set of equations comprises the steps of defining a block matrix R of size $2N_fN_O$ x $(N_fN_O+1)$ and determining it's 1,1-Schur complement as follows:

$$\mathbf{R} = \begin{pmatrix} \mathbf{A} & \mathbf{y} \\ -\mathbf{I} & \mathbf{0} \end{pmatrix} \tag{XIII}$$

$$S = 0 + IA^{-1}y \tag{XIV}$$

where **-I** is a negative identity matrix of size $N_fN_O$ x$N_fN_O$, and 0 is a zero vector of size $N_fN_O$ x 1.

4. Method according to claim 3, **characterized in that** the process for solving the set of equations comprises the step of finding displacement operators $\mathbf{F}_1$, $\mathbf{F}_2$ and generators $\mathbf{G}$ and $\mathbf{B}$ such, that

$$\nabla_{\{F1,F2\}} \mathbf{R} = \mathbf{R} - \mathbf{F}_1 \mathbf{R} \mathbf{F}_2^H = \mathbf{GJB}^H \tag{VII}$$

where $\mathbf{J} = \mathrm{diag}\{\pm 1, \pm 1, \dots, \pm 1\}$.

5. Method according to claim 4, **characterized in that** the displacement operators $\mathbf{F}_1$, $\mathbf{F}_2$ and generators $\mathbf{G}$ and $\mathbf{B}$ are determined as follows:

$$\mathbf{GB}^H = \begin{pmatrix} \mathbf{C}_0^* & \sqrt{N_0}\mathbf{I} \\ \mathbf{C}_1^* & \mathbf{0} \\ \mathbf{C}_2^* & \mathbf{0} \\ \vdots & \vdots \\ \mathbf{C}_{N_f-1}^* & \mathbf{0} \\ \mathbf{0} & -\frac{1}{\sqrt{N_0}}\mathbf{I} \\ \mathbf{0} & \mathbf{0} \\ \vdots & \vdots \end{pmatrix} \begin{pmatrix} \mathbf{C}_0^* & \sqrt{N_0}\mathbf{I} \\ \mathbf{C}_1^* & \mathbf{0} \\ \mathbf{C}_2^* & \mathbf{0} \\ \vdots & \vdots \\ \mathbf{C}_{N_f-1}^* & \mathbf{0} \\ \mathbf{1} & \mathbf{0} \end{pmatrix}^H \tag{XVI}$$

$$F_1 = \begin{pmatrix} Z & 0 \\ 0 & Z \end{pmatrix} \qquad (XV.1)$$

$$F_2 = \begin{pmatrix} Z & 0 \\ 0 & 0 \end{pmatrix} \qquad (XV.2)$$

$$Z = \begin{pmatrix} 0 & 0 & 0 & 0 & \cdots \\ I & 0 & 0 & 0 & \cdots \\ 0 & I & 0 & 0 & \cdots \\ 0 & 0 & I & 0 & \cdots \\ \vdots & \vdots & \vdots & \vdots & \ddots \end{pmatrix} \qquad (VI)$$

where $I$ denotes the $N_O \times N_O$ identity matrix and $0$ the $N_O \times N_O$ all zero matrix.

6. Method according to any one of the preceding claims, **characterized in that** the process for solving the set of equations comprises the steps of:

1. finding $\ominus$ such that the first row of $G$ multiplied by $\ominus$ results in a vector with only one nonzero element;

2. postmultiplying $\bar{G}$ $G\ominus$ and $\bar{B} = B\ominus$ and denoting the column with the nonzero first element of $\bar{G}$ as $\bar{g}_{pvt}$ and the column with the nonzero first element of $\bar{B}$ as $\bar{b}_{pvt}$;

3. if the Cholesky Factor is explicitly needed, then storing $\bar{g}_{pvt}$ into the appropriate column of the Cholesky Factor;

4. premultiplying $\bar{g}_{pvt}$ with $F_1$ as defined by equation (XV.1) and premultiplying $\bar{b}_{pvt}$ with $F_2$ as defined by equation (XV.2);

5. deleting the first row of the generator matrices $\bar{G}$ and $\bar{B}$ followed by selecting $\bar{G}$ and $\bar{B}$ as G and B of the next iteration;

6. repeating steps 1 - 5 $N_f N_O$ times;

7. multiplying the remaining $N_D$ rows of $B$ with the remainder of $G$ to obtain the displacement representation of the FF filter coefficients (14), or, in the single output ($N_D = 1$) case, the FF filter coefficients (14) itself.

7. Method according to claim 6, **characterized in that** in step 2 the first $N_f N_O - i$ rows of G and B are multiplied by $\ominus$ only once, where i is the iteration number $0 \le i \le N_f N_O - 1$.

8. Circuit arrangement for equalizing a receive signal in a digital receiver, with a DFE (decision feedback equalizer) (2) including one or several FF (feed-forward) filters (4) and one or several FB (feed-back) filters (6), and circuit means for performing a process based on displacement structure theory for solving a set of equations defining optimum filter coefficients for the DFE (2) in terms of a CIR (channel impulse repose) of the receiver, **characterized in that** said circuit means are configured and arranged such that they first compute the FF filter coefficients (14) and then compute the FB filter coefficients (16) by convolving the FF filter coefficients (14) with the CIR.

9.  Circuit arrangement preferably according to claim 8 for equalizing a receive signal in a digital receiver, with a DFE (decision feedback equalizer) (2) including one or several FF (feed-forward) filters (4) and one or several FB (feed-back) filters (6), and circuit means for performing a process for solving a set of equations defining optimum filter coefficients for the DFE (2) in terms of a CIR (channel impulse repose) of the receiver, **characterized in that** said circuit means comprise a linear chain of CORDIC (Coordinate Rotation Digital Computer) type processing elements (21, 22, 23, 31, 32, 33, 34, 41, 42, 43, 50, 61, 62, 63, 64, 65, 70, 81, 82, 91).

10. Circuit arrangement according to claim 9, **characterized in that** said circuit means comprise a master CORDIC block (51) and a slave CORDIC block (52), said master CORDIC block (51) receiving at a control input a first status signal and being switched between a vectoring mode of operation and a rotation mode of operation depending on the first status signal, said master CORDIC block (51) producing a second status signal and transmitting it to a control input of the slave CORDIC block (52) which is being switched between a rotating mode of operation with a first direction of rotation and a rotation mode of operation with a second rotation of direction depending on the second status signal.

11. Circuit arrangement according to anyone of claims 9 or 10, **characterized in that** said circuit means further comprise a FIFO memory means (45; 95) arranged in a feedback loop with respect to the linear chain of CORDIC type processing elements (41, 42, 43; 91).

Fig.1

Fig.2

Fig.3

Fig.4

Fig.5

Fig.6

**Fig.7**

**Fig.8**

**Fig.9**

Fig. 10

Fig. 11

Fig. 12

Fig. 13

Fig. 14

Number of CORDIC microrotations vs. Residual ISI

Number of CORDIC microrotations

Fig. 15

Wordlengths vs. Residual ISI

Wordlength (bits)

Fig.16

Fig.17

**European Patent Office**

# EUROPEAN SEARCH REPORT

**Application Number**

EP 01 81 0844

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | KAILATH, SAYED: "Displacement structure: theory and applications" SIAM REVIEW, vol. 37, no. 3, September 1995 (1995-09), pages 297-386, XP002189613 * abstract * | 1-11 | H04L25/03 |
| X | CHUN, KAILATH: "Generalized displacement structure for block-Toeplitz, Toeplitz-block and Toeplitz-derived matrices" NATO ASI SERIES. SERIES F: COMPUTER AND SYSTEM SCIENCES, vol. F70, 1991, pages 215-236, XP000852863 Berlin, DE * section 4C * | 1-11 | |
| X | SAYED ET AL.: "Time-variant displacement structure and triangular arrays" IEEE TRANSACTIONS ON SIGNAL PROCESSING, vol. 42, no. 5, May 1994 (1994-05), pages 1052-1062, XP002189612 * page 1056, right-hand column, paragraph 2 - paragraph 3 * | 1-11 | **TECHNICAL FIELDS SEARCHED (Int.Cl.7)** H04L |
| A | AL-DHAHIR, CIOFFI: "MMSE decision-feedback equalizers: finite-length results" IEEE TRANSACTIONS ON INFORMATION THEORY, vol. 41, no. 4, July 1995 (1995-07), pages 961-975, XP002190789 New York, US * abstract * * Appendix II * | 1-11 | |
| | -/-- | | |

The present search report has been drawn up for all claims

| Place of search | Date of completion of the search | Examiner |
|---|---|---|
| THE HAGUE | 11 March 2002 | Scriven, P |

EPO FORM 1503 03.82 (P04C01)

# EUROPEAN SEARCH REPORT

Application Number

EP 01 81 0844

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | AL-DHAHIR, SAYED: "CORDIC-based MMSE-DFE coefficient computation" DIGITAL SIGNAL PROCESSING, vol. 9, no. 3, July 1999 (1999-07), pages 178-194, XP002189614 New York, US * abstract * | 8-11 | |
| A | I-CHANG JOU ET AL.: "VLSI algorithms and pipelined architectures for solving structured linear system" AGEAN WORKSHOP ON COMPUTING, 8 - 11 July 1986, pages 156-165, XP008000439 Berlin, DE * abstract * * section IV * * figure 4.1 * | 8-11 | |
| A | YU HEN HU: "CORDIC-based VLSI architectures for digital signal procesing" IEEE SIGNAL PROCESSING MAGAZINE, vol. 9, no. 3, July 1992 (1992-07), pages 16-35, XP000563347 New York, US * page 28, left-hand column, paragraph 2 - page 29, left-hand column, paragraph 3 * * page 30, right-hand column, paragraph 3 - page 31, left-hand column, paragraph 2 * | 8-11 | TECHNICAL FIELDS SEARCHED (Int.Cl.7) |
| X,P | SAILER: "Decision feedback equalization for powerline and HIPERLAN" 11 April 2001 (2001-04-11) , SWISS FEDERAL INSTITUTE OF TECHNOLOGY , ZÜRICH, CH XP002189615 * the whole document * | 1-11 | |

The present search report has been drawn up for all claims

| Place of search | Date of completion of the search | Examiner |
|---|---|---|
| THE HAGUE | 11 March 2002 | Scriven, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)